# EUROPÄISCHE PATENTANMELDUNG

(11) **EP 2 746 116 A2**
(43) Veröffentlichungstag der Anmeldung: **25.06.2014**
(21) Anmeldenummer: 13189985.8
(22) Anmeldetag: 24.10.2013
(51) Int. Cl.: B60S 1/16

(54) **Antriebseinrichtung mit positionsabhängiger Schalteinrichtung für Signalauswertung auf ein abfallendes Signal**

(30) Priorität: 20.12.2012 DE 102012223894
(71) Anmelder: ROBERT BOSCH GMBH, 70442 Stuttgart (DE)
(72) Erfinder: Reith, Michael, 77815 Buehl-Vimbuch (DE)

(57) **Zusammenfassung**

Antriebseinrichtung (100) für einen Wischerarm, umfassend einen Elektromotor (105), ein mit dem Elektromotor (105) verbundenes Getriebe (110) mit einer Antriebswelle zur Verbindung mit dem Wischerarm und eine Schalteinrichtung (150, 155) zur Erzeugung eines Signals mit abfallender Signalflanke. Die Schalteinrichtung (150, 155) umfasst eine mit der Antriebswelle (115) gekoppelte Schaltvertiefung (135) und eine Kontaktfeder (155), die durch die Schaltvertiefung (135) von einer Kontaktfläche (150) entfernbar ist, so dass eine elektrische Verbindung zwischen einem Kontaktbereich (165) der Kontaktfeder (155) und der Kontaktfläche (150) in Abhängigkeit der Position der Antriebswelle (115) unterbrechbar ist.

## Beschreibung

Die Erfindung betrifft eine Antriebseinrichtung für einen Wischerarm. Insbesondere betrifft die Erfindung eine Antriebseinrichtung mit einer Antriebswelle für einen Wischerarm und einer Schalteinrichtung zur Steuerung der Antriebseinrichtung in Abhängigkeit der Position der Antriebswelle.

### Stand der Technik

Ein elektrischer Kleinantrieb, der beispielsweise zur Betätigung eines Wischerarms einer Wischeinrichtung eines Kraftfahrzeugs verwendet wird, umfasst üblicherweise einen Elektromotor mit einem nachgeschalteten Untersetzungsgetriebe, welches eine Antriebswelle umfasst, die den Wischerarm antreibt. Um bei einem Abstellen der Antriebseinrichtung sicherzustellen, dass sich der Wischerarm in einer Parkposition befindet und eine Sicht eines Insassen des Kraftfahrzeugs nicht behindert, umfasst die Antriebseinrichtung eine Schalteinrichtung, welche ein elektrisches Signal abzugeben in der Lage ist, aus dem der Aufenthalt des Wischerarms in der Parkposition geschlossen werden kann. Soll die Antriebseinrichtung, beispielsweise gesteuert durch einen Fahrer des Kraftfahrzeugs, abgestellt werden, so wird der Elektromotor nicht abgeschaltet, bevor der Wischerarm die Parkposition erreicht hat.

Eine übliche Schalteinrichtung umfasst eine auf der Antriebswelle angeordnete Kurven- oder Steuerscheibe mit einer erhöhten Schaltnocke, die dazu eingerichtet ist, in Abhängigkeit von der Position der Antriebswelle einen elektrischen Kontakt zu schließen, der aus einer Kontaktfeder und einer Kontaktfläche besteht. Die Schaltnocke wirkt derart auf die Kontaktfeder, dass ein Kontaktbereich der Kontaktfeder in elektrischen Kontakt mit der Schaltfläche gelangt und eine elektrische Verbindung zwischen der Kontaktfeder und der Schaltfläche hergestellt wird.

Dabei wird bei einer üblichen Schalteinrichtungen durch die erhöhte Schaltnocke an der Kurven- oder Steuerscheibe ein Kontakt zwischen zwei Leiterbahnen im Getriebedeckel hergestellt. Dadurch entsteht ein Parksignal, dass von einer Parkstellungselektronik ausgewertete wird.

Aufgrund von Alterung, Abrieb, Feuchtigkeit, Verschmutzung und anderen ungünstigen Betriebsumständen ist es möglich, dass sich im Bereich zwischen der Kontaktfeder und der Kontaktfläche eine Verunreinigung bildet, die das Schließen der elektrischen Verbindung zwischen der Kontaktfeder und der Kontaktfläche verhindert. Ein unzuverlässiges Erzeugen eines Parksignals kann die Folge sein.

Zudem besteht während des Parkzustandes ein permanenter elektrischer Kontakt, was zu einem unerwünschten Stromverbrauch im Parkzustand der Antriebseinrichtung für einen Wischerarm. Der Stromverbrauch einer derartigen Antriebseinrichtung ist insbesondere dann nachteilig, wenn beispielsweise ein Fahrzeug mit einer derartigen Antriebseinrichtung für einen Wischerarm nicht in Betrieb ist, insbesondere wenn sich ein Motor des Fahrzeugs in Parkstellung oder Ruhestellung befindet

Es ist Aufgabe der Erfindung, eine Antriebseinrichtung mit einer verbesserten Schalteinrichtung bereit zu stellen, mit welcher die oben genannten Nachteile im Wesentlichen nicht auftreten. Die Erfindung löst diese Aufgabe durch eine Antriebseinrichtung mit den Merkmalen des Anspruchs 1. Unteransprüche geben bevorzugte Ausführungsformen wieder.

### Offenbarung der Erfindung

Eine erfindungsgemäße Antriebseinrichtung für einen Wischerarm umfasst einen Elektromotor, ein mit dem Elektromotor verbundenes Getriebe mit einer Antriebswelle zur Verbindung mit dem Wischerarm und eine Schalteinrichtung zur Erzeugung eines Signals mit abfallender Signalflanke, vorzugsweise zur Abschaltung des Elektromotor in einer vorbestimmten Position der Antriebswelle. Die Schalteinrichtung umfasst eine mit der Antriebswelle gekoppelte Schaltvertiefung und eine Kontaktfeder, die durch die Schaltvertiefung von einer Kontaktfläche entfernbar ist, so dass eine elektrische Verbindung zwischen der Kontaktfeder und der Kontaktfläche in Abhängigkeit von der Position der Antriebswelle unterbrechbar ist. Durch eine Unterbrechung der elektrischen Verbindung bzw. durch ein Abfallen eines Stromflusses welche bzw. welcher mittels der Schaltvertiefung erzeugbar ist entsteht ein Parksignal. Somit ermöglicht die erfindungsgemäße Antriebseinrichtung für einen Wischerarm einen Einsatz eines Parkstellungssystems, beispielsweise einer Parkstellungselektronik, zur elektrischen Erkennung eines Parksignals, insbesondere einer abfallenden Signalflanke.

Vorzugsweise ist die Kontaktfläche in ein elektrisch isolierendes Material eingebettet. Somit kann der elektrische Kontakt durch eine Verschiebebewegung unterbrochen werden, indem die Kontaktfeder unter Kontaktdruck von der Kontaktfläche in einer Ebene in einen Bereich des elektrisch isolierenden Materials verschoben wird.

Vorzugsweise ist die Kontaktfeder derart geformt, dass sie durch die Schaltvertiefung über die Kontaktfläche geführt wird, bevor die elektrische Verbindung unterbrochen wird. Das Trennen bzw. das Herstellen der elektrischen Verbindung zwischen der Kontaktfeder und der Kontaktfläche wird somit nicht allein durch eine Verschiebebewegung unterbrochen, bei der ein Film von Verunreinigungen unter ungünstigen Bedingungen lediglich zwischen der Kontaktfläche und der Kontaktfeder verteilt werden kann. Stattdessen kann beim Übergang von einer Parkstellung in einen Betriebszustand der Antriebseinrichtung durch das Aufsetzen des Kontaktbereichs der Kontaktfeder auf der Kontaktfläche ein Durchstoßen eines individuell vorhandenen Verunreinigungs- oder Oxidationsfilms erreicht werden.

Vorzugsweise umfasst die Kontaktfeder mindestens eine Biegestelle, an der sie elastisch verformbar ist, während der Kontaktbereich der Kontaktfeder über die Kontaktfläche geführt wird. Durch entsprechende Wahl einer Federkonstante im Bereich der mindestens einen Biegestelle kann eine Anpresskraft bzw. ein Kontaktdruck gesteuert werden, mit der bzw. dem der Kontaktbereich der Kontaktfeder gegen die Kontaktfläche gepresst wird. Somit kann beim Übergang von einer Parkstellung in einen Betrieb der Antriebseinrichtung eine einwandfreie Reinigung bei gleichzeitig niedrigem Verschleiß durch Abrieb erzielt werden.

Vorzugsweise schließt eine Erstreckungsrichtung der Kontaktfläche mit einer Wirkungsrichtung der Schaltvertiefung einen Winkel kleiner als 90° ein, so dass ein Kontaktbereich der Kontaktfeder mittels der Schaltvertiefung über die Kontaktfläche führbar ist.

Erfindungsgemäß kann der Stromverbrauch der Antriebseinrichtung für einen Wischerarm im Parkzustand der Antriebseinrichtung reduziert werden. Des Weiteren können beim Übergang von einer Parkstellung in einen Betriebszustand der Kontaktbereich der Kontaktfeder und die Kontaktfläche durch das Führen des Kontaktbereichs über die Kontaktfläche gereinigt werden, so dass beispielsweise eine Verunreinigungs- oder Oxidschicht aufgelöst bzw. entfernt werden kann. Somit stellt die erfindungsgemäße Antriebseinrichtung eine Antriebseinrichtung für einen Wischarm mit erhöhter Zuverlässigkeit und geringerem Stromverbrauch bereit, mit welchem ein Einsatz eines Parkstellungssystems, beispielsweise einer Parkstellungselektronik, zur elektrischen Erkennung eines Parkstellungssignals, insbesondere einer abfallenden Signalflanke ermöglicht wird. Somit ermöglicht die erfindungsgemäße Antriebseinrichtung eine kostengünstige Bereitstellung des von einer Elektronik auszuwertenden Parkstellungssignals.

Vorzugsweise ist die Kontaktfeder im Bereich der Biegestelle V-förmig, wodurch die Kontaktfeder besonders kostengünstig herstellbar ist.

Vorzugsweise betätigt die Schaltvertiefung die Kontaktfeder im Bereich der Biegestelle. Auf diese Weise kann ein erforderlicher Bauraum der Kontaktfeder minimiert werden.

Vorzugsweise verläuft die Wirkungsrichtung der Schaltvertiefung parallel zu einer Drehachse der Antriebswelle. Diese Ausführungsform ist an üblichen Antriebseinrichtungen anzutreffen, so dass die erfindungsgemäße Schalteinrichtung mit bestehenden Komponenten einer Antriebseinrichtung kombinierbar sein kann. Herstellungskosten für die Antriebseinrichtung können dadurch minimiert werden. Vorzugsweise ist im Bereich zwischen der Kontaktfläche und dem Kontaktbereich ein Schmierstoff vorgesehen. Vorzugsweise handelt es sich dabei um ein Niedertemperaturfett. Dadurch kann der Abrieb zwischen der Kontaktfläche und dem Kontaktbereich minimiert sein, während das Trennen bzw. Herstellen der elektrischen Verbindung zwischen der Kontaktfläche und dem Kontaktbereich wenig oder gar nicht beeinträchtigt wird.

Vorzugsweise umfasst der Kontaktbereich der Kontaktfeder eine löffelförmige Ausformung. Somit ist eine langlebige und besonders kostengünstig Kontaktfeder herstellbar. Zusätzlich oder alternativ kann der Kontaktbereich einen Kontaktstift umfassen.

### Kurze Beschreibung der Zeichnungen

Ausführungsbeispiele der Erfindung sind in den Figuren dargestellt und werden im Folgenden näher beschrieben. Es zeigen:
Figur 1 eine Antriebseinrichtung mit eine Schalteinrichtung gemäß einer ersten Ausführungsform;
Figur 2 eine Schalteinrichtung gemäß einer weiteren Ausführungsform für die Antriebseinrichtung von Fig. 1; und
Figur 3a bis 3c eine Schalteinrichtung gemäß einer weiteren Ausführungsform für die Antriebseinrichtung von Fig. 1 in unterschiedlichen Betätigungszuständen.

### Genaue Beschreibung von Ausführungsbeispielen

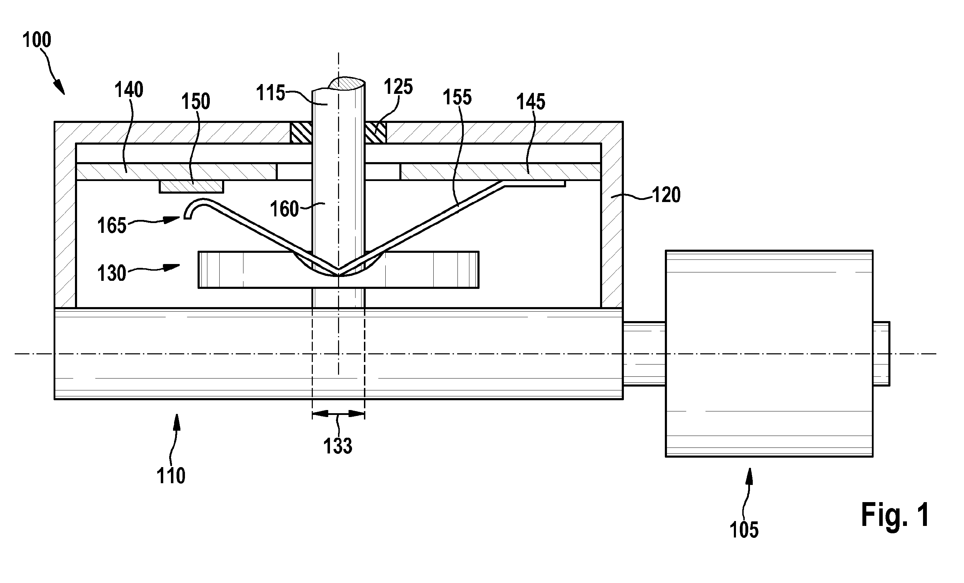

Fig. 1 zeigt eine Antriebseinrichtung 100 zur Betätigung eines Wischerarms einer Wischereinrichtung an einem Kraftfahrzeug. Die Antriebseinrichtung 100 ist insbesondere geeignet zum Antrieb eines Heckscheibenwischers eines Personenkraftwagens.

Die Antriebseinrichtung 100 umfasst einen Elektromotor 105, der ein Getriebe 110 mit einer Antriebswelle 115 antreibt. Der Elektromotor 105 ist üblicherweise ein Gleichstrommotor. Das Getriebe 110 ist nicht detaillierter dargestellt; in einer bevorzugten Ausführungsform handelt es sich um ein Schneckengetriebe. Alternativ oder zusätzlich kann das Getriebe 110 beispielsweise Elemente eines Stirnrad- oder Planetengetriebes umfassen. Die Antriebswelle 115 erstreckt sich in Fig. 1 vom Getriebe 110 aus nach oben. In diesem Bereich durchquert die Antriebswelle 115 einen durch eine Abdeckung 120 gebildeten Raum. Die Abdeckung 120 ist mit dem Getriebe 110 verbunden und dient dem Schutz der im Raum innerhalb der Abdeckung 120 aufgenommenen Komponenten. Oben ist in die Abdeckung 115 eine Aussparung eingebracht, durch welche die Antriebswelle 115 verläuft. In diesem Bereich ist die Antriebswelle 115 bezüglich der Abdeckung 120 mittels einer Dichtung 125 abgedichtet. Ein oberes Ende der Antriebswelle 115, welches zur Verbindung und zum Antrieb eines Wischerarms ausgebildet ist, ist in Fig. 1 nicht dargestellt.

Im Bereich des durch die Abdeckung 120 gebildeten Raums ist an der Antriebswelle 115 ein Stirnrad 130 angebracht. Das Stirnrad 130 umfasst eine Schaltvertiefung 135, die sich vom Stirnrad 130 in einem vorbestimmten radialen Abstand von der Antriebswelle 115 befindet. Vorzugsweise ist die Schaltvertiefung zumindest im Wesentlichen in axialer Richtung ausgebildet.

Oberhalb des Stirnrads 130 sind eine erste Platine 140 und eine zweite Platine 145 in gleicher Höhe über dem Getriebe 110 angeordnet. An der ersten Platine 140 ist eine Kontaktfläche 150 angebracht, die beispielsweise ein Abschnitt einer Leiterbahn sein kann. Außerdem kann die erste Platine 140 eine Aussparung aufweisen, in die ein Kontaktelement eingesetzt ist. Dabei stellt das in die Platine 140 eingebettete Kontaktelement die Kontaktfläche 150 bereit. An der zweiten Platine 145 ist eine Kontaktfeder 155 befestigt. Die Kontaktfeder 155 ist elektrisch leitfähig und erstreckt sich von der Unterseite der zweiten Platine 145 zur Unterseite der ersten Platine 140. Dabei ist die Kontaktfeder 155 U- oder V-förmig geformt. Eine Biegestelle 160 befindet sich an einem unteren Scheitelpunkt der Kontaktfeder 155. In einem Betriebszustand der Antriebseinrichtung ist die Kontaktfeder typischerweise im Bereich der Biegestelle 160 in Kontakt mit einer obersten ebenen Oberfläche des Stirnrads, welche der Kontaktfläche 150 zugewandt ist.

Die Kontaktfeder 155 umfasst an ihrem freien Ende einen Kontaktbereich 165. Der Kontaktbereich 165 ist zum Herstellen einer elektrischen Verbindung zur Kontaktfläche 150 ausgebildet und befindet sich unterhalb der Kontaktfläche 150. Der Kontaktbereich 165 ist in der dargestellten Ausführungsform löffelförmig, d. h. in Form eines umgedrehten U ausgeformt. Zusätzlich oder alternativ kann ein Kontaktstift vorgesehen sein, der sich im Bereich des Kontaktbereichs 165 in Richtung der Kontaktfläche 150 erstreckt.

Treibt der Elektromotor 105 das Getriebe 110 an, so dass die Antriebswelle 115 gedreht wird, wird die Kontaktfeder 155 von dem Stirnrad 130 in Abhängigkeit der Position der Antriebswelle 115 mehr oder weniger stark an die Kontaktfläche 150 gedrückt. In einer Position, in welcher sich die Biegestelle 160 der Kontaktfeder 155 auf der obersten ebenen Oberfläche des Stirnrads befindet, welche der Kontaktfläche 150 zugewandt ist, ist der Kontaktdruck zwischen der Kontaktfeder 155 und der Kontaktfläche 150 am höchsten. Sobald das Stirnrad eine Position erreicht, in welcher die Biegestelle 160 in die Schaltvertiefung 135 ein gleiten kann, nimmt der Kontaktdruck zwischen der Kontaktfeder 155 und Kontaktfläche 150 ab. Dabei ist die Schaltvertiefung 135 und die Kontaktfeder derart ausgebildet, dass in einer Position, in welcher sich die Biegestelle 160 am tiefsten Punkt der Schaltvertiefung befindet kein Kontakt zwischen der Kontaktfeder 155 und der Kontaktfläche 150 besteht. Typischerweise ist die Schaltvertiefung 135 als stufenfreie Mulde ausgebildet. Jedoch kann die Schaltvertiefung 135 auch stufenartig ausgebildet sein.

Dementsprechend ist der Kontaktdruck als auch ein Abstand zwischen dem Kontaktbereich 165 der Kontaktfeder 155 und der Kontaktfläche 150 auf der ersten Platine 140 in Abhängigkeit von der Position der Biegestelle 160 der Kontaktfeder 155 auf der der Kontaktfläche 150 zugewandten Oberfläche des Stirnrads mehr oder weniger groß. In einer Position, in welcher sich die Biegestelle 160 auf der obersten ebenen Stirnradoberfläche, also nicht im Bereich der Schaltvertiefung befindet, ist dieser Abstand Null, so dass der elektrische Kontakt zwischen der zweiten Platine 145 im Bereich des befestigten Endes der Kontaktfeder 155 und der ersten Platine 140 im Bereich der Kontaktfläche 150 mit einem bestimmten Kontaktdruck hergestellt ist. Befindet sich die Biegestelle 160 in der Schaltvertiefung innerhalb eines bestimmten Bereichs 133, so ist der Kontakt zwischen der Kontaktfeder 155 und dem Kontaktbereich 150 unterbrochen. Der Wischerarm ist derart an der Antriebswelle 115 angebracht, dass er sich in einer Parkstellung befindet, wenn der beschriebene elektrische Kontakt unterbrochen ist.

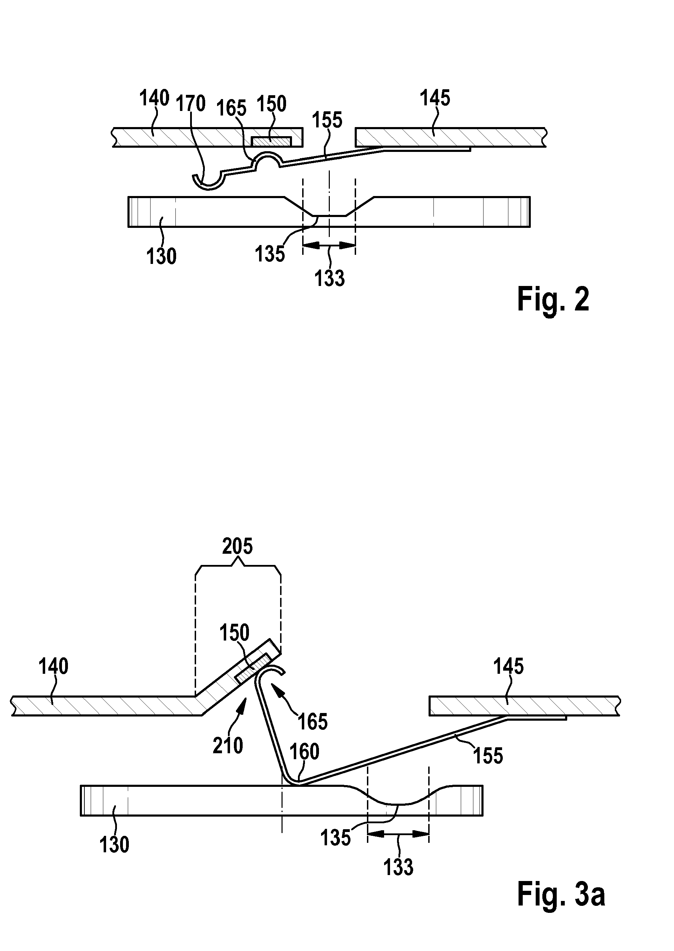

Fig. 2 zeigt eine Schalteinrichtung gemäß einer weiteren Ausführungsform für die Antriebseinrichtung von Fig. 1. Zu Darstellungszwecken ist die Antriebswelle 115 nicht dargestellt und die Platinen 140 und 145 sind unzusammenhängend dargestellt. Im Unterschied zu der in Fig.1 dargestellten Ausführungsform weist die Kontaktfeder an ihrem freien Ende gemäß der in Fig. 2 dargestellten Ausführungsform einen als U oder V ausgebildeten Stirnradkontakt 170 auf. Zudem ist der Kontaktbereich 165, über den der Kontakt mit der Kontaktfläche 150 hergestellt wird, nicht am freien Ende der Kontaktfeder sondern in die Kontaktfeder 155 integriert. Die Funktionsweise der in Fig.2 dargestellten Ausführungsform ist für den Fachmann unter Berücksichtigung der Ausführungen zu der in Fig.1 dargestellten Ausführungsform verständlich. En Vorteil der in Fig.2 dargestellten Ausführungsform ist, dass mit ihr eine besonders Bauraum sparende Antriebseinrichtung bereitgestellt wird.

Fig. 3a bis Fig. 3c zeigen eine weitere Ausführungsform der Elemente innerhalb der Abdeckung 120 von Fig. 1. Zu Darstellungszwecken ist die Antriebswelle 115 nicht dargestellt und die Platinen 140 und 145 sind unzusammenhängend dargestellt. In der Abfolge der Fig. 3a bis Fig. 3c dreht sich das Stirnrad 130 so, dass die Schaltvertiefung 135 von rechts nach links verschoben wird. Im Folgenden wird lediglich auf die Unterschiede der in den Fig. 3a bis Fig. 3c dargestellten Vorrichtung zu der in Fig. 1 dargestellten Antriebseinrichtung 100 eingegangen.

Im Unterschied zur Darstellung von Fig. 1 ist in den Fig. 3a bis Fig. 3c ein Abschnitt 205 der ersten Platine 140 , unter dem die Kontaktfläche 150 angeordnet ist, in einem Winkel von ca. 45° bezüglich der Vertikalen angeordnet. In einer Variante kann der Abschnitt 205 nicht von der ersten Platine 140 umfasst sondern als diskretes Bauelement mit dieser verbunden sein.

Die vertikale Richtung verläuft parallel zur Drehachse der nicht dargestellten Antriebswelle 115. Die Wirkungsrichtung der Schaltvertiefung 135 verläuft ebenfalls in vertikaler Richtung, da die Schaltvertiefung 135 je nach Position des Stirnrades 130 bzw. der Antriebswelle 115 die Kontaktfeder 155 mehr oder weniger in vertikaler Richtung auslenkt. Die Ausrichtung des Abschnitts 205 ist somit auch bezüglich der Wirkungs- oder Auslenkungsrichtung der Schaltvertiefung 135 angebbar. Der Winkel des Abschnitts 205 ist als α eingezeichnet. Vorzugsweise beträgt dieser Winkel α ca. 20° bis 60°; in einer bevorzugten Ausführungsform beträgt der Winkel α ca. 30° bis 60° und insbesondere 45°.

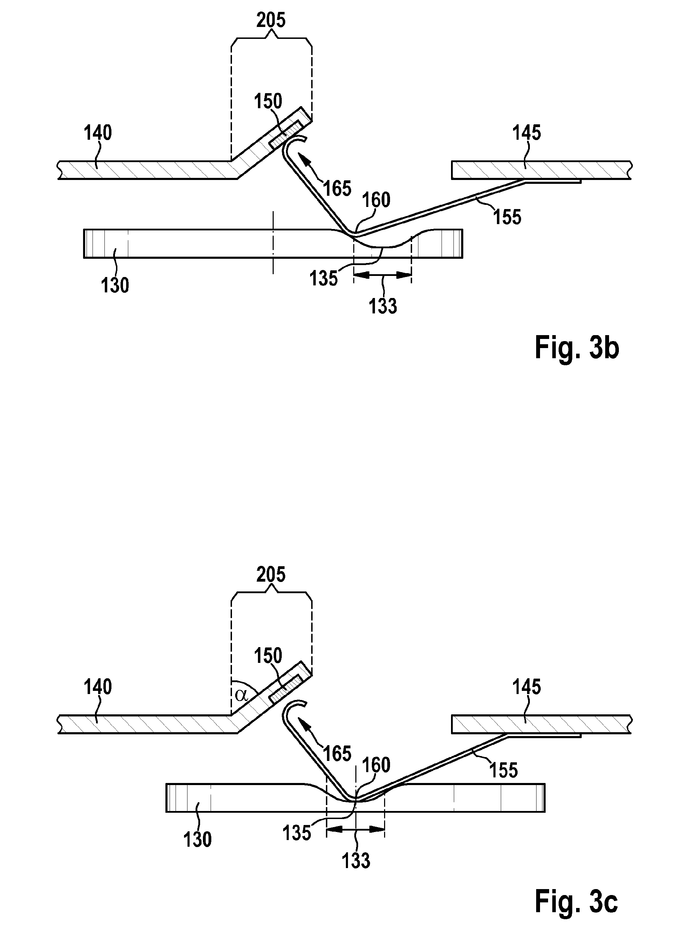

In der in Fig. 3a dargestellten Position des Stirnrads 130 ist die Kontaktfeder 155, insbesondere die Biegestelle nicht in Kontakt mit der Schaltvertiefung 135. In einem derartigen Zustand ist ein Berührungspunkt zwischen dem Kontaktbereich 165 der Kontaktfeder 155 und der Kontaktfläche 150 der ersten Platine 140 im Vergleich zu der in Fig. 3b dargestellten Position im oberen Bereich eines Endes der ersten Platine 140 angeordnet. Typischerweise liegt die Kontaktfeder 155 dabei unter einer gewissen Biegespannung, welche die Biegestelle 160 nach unten drückt und in Anlage mit dem Stirnrad 130 hält.

In Fig. 3b befindet sich das Stirnrad 130 in einer Position, in der die Kontaktfeder 155 im Bereich der Biegestelle 160 in Kontakt mit der Schaltvertiefung 135 steht. Beim Übergang von der in Fig. 3a dargestellten Position in die in Fig. 3b dargestellte Position wird der sich links von der zweiten Platine 145 gelegenen Abschnitt der Kontaktfeder 155 nach unten bewegt. Durch diese Bewegung ist der Kontaktbereich 165 der Kontaktfeder 155 mittels der Schaltvertiefung 135 , über die Kontaktfläche 150 geführt worden. Durch diese Reibbewegung, die bei jedem Unterbrechen und Schließen der elektrischen Verbindung zwischen der ersten Platine 140 und der zweiten Platine 145 erfolgt, wird der Berührungspunkt, der zeitweise zwischen dem Kontaktbereich 165 und der Kontaktfläche 155 besteht, gereinigt. Verunreinigungen, Ablagerungen oder Oxide werden durch die beschriebene Bewegung weggeschoben, so dass die elektrische Verbindung zwischen dem Kontaktbereich 165 der Kontaktfeder 155 und der Kontaktfläche 150 gut herstellbar und gut trennbar bleibt.

In einer Ausführungsform kann im Bereich zwischen dem Kontaktbereich 165 und der Kontaktfläche 150 ein Schmierstoff 210 vorgesehen sein, beispielsweise ein Tieftemperaturfett.

Durch die erfindungsgemäße Kombination einer Bewegung des Kontaktbereichs 165 auf die Kontaktfläche 150 zu und anschließend an dieser entlang beim Schließen der elektrischen Verbindung, bzw. der umgekehrten Reihenfolge der Bewegungen beim Öffnen der elektrischen Verbindung, wird die Reinigung der Kontaktpartner in besonders effizienter Weise realisiert. Die Präzision und Langlebigkeit der durch die Kontaktfeder 155 in Verbindung mit der Kontaktfläche 150 gebildeten Schalteinrichtung kann eine gleichbleibende Genauigkeit des Trennens bzw. Herstellens der elektrischen Verbindung bezüglich der Position der Antriebswelle 115 unterstützen. Darüber hinaus kann eine Zuverlässigkeit des Schaltelements gesteigert sein, so dass insgesamt eine Betriebssicherheit und eine Langlebigkeit der Antriebseinrichtung 100 verbessert sein können.

Solange eine Position der Antriebswelle und damit des Stirnrads vorliegt, in welcher die Biegestelle 160 nicht innerhalb des bestimmten Bereichs 133 der Schaltvertiefung ist ein Kontakt zwischen der Kontaktfeder 155 und dem Kontaktbereich 165 sichergestellt. In einer Position in welche die Biegestelle gerade in den bestimmten Bereich der Schaltvertiefung eintritt löst sich der Kontaktbereich 165 von der Kontaktfläche 150, so dass die elektrische Verbindung zwischen der ersten Platine 140 und der zweiten Platine 145 durch die Kontaktfeder 155 mittels der Schaltvertiefung unterbrochen ist.

In Fig. 3c ist eine Position der Antriebswelle dargestellt, in welcher die Biegestelle 160 der Kontaktfeder 155 innerhalb des bestimmten Bereichs 133 der Schaltvertiefung 135 befindet, so dass der Kontakt zwischen Kontaktbereich 165 und Kontaktfläche unterbrochen ist. Die Kontaktfeder 155 ist so weit nach unten ausgelenkt, dass der Kontaktbereich 165 in einem gewissen Abstand von der Kontaktfläche 150 angeordnet ist wodurch eine elektrische Verbindung zwischen der ersten Platine 140 und der zweiten Platine 145 unterbrochen ist.

Somit wird eine Antriebseinrichtung für einen Wischarm mit geringerem Stromverbrauch bereitgestellt, mit welchem ein Einsatz eines Parkstellungssystems, beispielsweise einer Parkstellungselektronik, zur elektrischen Erkennung eines Parkstellungssignals, insbesondere einer abfallenden Signalflanke ermöglicht wird.

## Patentansprüche

1. Antriebseinrichtung (100) für einen Wischerarm, umfassend:
- einen Elektromotor (105);
- ein mit dem Elektromotor (105) verbundenes Getriebe (110) mit einer Antriebswelle zur Verbindung mit dem Wischerarm;
- eine Schalteinrichtung (150, 155) zur Erzeugung eines Signals mit abfallender Signalflanke,
wobei die Schalteinrichtung (150, 155) eine mit der Antriebswelle (115) gekoppelte Schaltvertiefung (135) und eine Kontaktfeder (155) umfasst, die durch die Schaltvertiefung (135) von einer Kontaktfläche (150) entfernbar ist, so dass eine elektrische Verbindung zwischen einem Kontaktbereich (165) der Kontaktfeder (155) und der Kontaktfläche (150) in Abhängigkeit der Position der Antriebswelle (115) unterbrechbar ist.

2. Antriebseinrichtung (100) nach Anspruch 1, **dadurch gekennzeichnet, dass** die Kontaktfläche (150) in ein elektrisch isolierendes Material eingebettet ist.

3. Antriebseinrichtung (100) nach Anspruch 1 oder 2, **dadurch gekennzeichnet, dass** die Kontaktfeder (155) derart geformt ist, dass sie durch die Schaltvertiefung (135) über die Kontaktfläche (150) geführt wird, bevor die elektrische Verbindung unterbrochen wird.

4. Antriebseinrichtung (100) nach einem der vorhergehenden Ansprüche, **dadurch gekennzeichnet, dass** die Kontaktfeder (155) mindestens eine Biegestelle (160) umfasst, an der die Kontaktfeder (155) elastisch verformbar ist, während der Kontaktbereich (165) der Kontaktfeder (155) über die Kontaktfläche (150) geführt wird.

5. Antriebseinrichtung (100) nach einem der vorhergehenden Ansprüche, **dadurch gekennzeichnet, dass** eine Erstreckungsrichtung der Kontaktfläche (150) mit einer Wirkungsrichtung der Schaltvertiefung (135) einen Winkel (α) kleiner als 90° einschließt, so dass ein Kontaktbereich (165) der Kontaktfeder (155) durch die Betätigung der Schaltvertiefung (135) über die Kontaktfläche (150) führbar ist.

6. Antriebseinrichtung (100) nach einem der vorhergehenden Ansprüche, **dadurch gekennzeichnet, dass** die Kontaktfeder (155) im Bereich der Biegestelle (160) V-förmig ist.

7. Antriebseinrichtung (100) nach einem der vorhergehenden Ansprüche, **dadurch gekennzeichnet, dass** die Schaltvertiefung (135) die Kontaktfeder (155) im Bereich der Biegestelle (160) betätigt.

8. Antriebseinrichtung (100) nach einem der vorangehenden Ansprüche, **dadurch gekennzeichnet, dass** die Wirkungsrichtung der Schaltvertiefung (135) parallel zu einer Drehachse der Antriebswelle (115) verläuft.

9. Antriebseinrichtung (100) nach einem der vorangehenden Ansprüche, **dadurch gekennzeichnet, dass** ein Schmierstoff (210) im Bereich zwischen der Kontaktfläche (150) und dem Kontaktbereich (165) vorgesehen ist.

10. Antriebseinrichtung (100) nach einem der vorangehenden Ansprüche, **dadurch gekennzeichnet, dass** der Kontaktbereich (165) eine löffelförmige Ausformung der Kontaktfeder (155) umfasst.
